# EUROPÄISCHE PATENTSCHRIFT

(11) **EP 0 630 951 B1**
(45) Veröffentlichungstag und Bekanntmachung des Hinweises auf die Patenterteilung: **03.09.1997**
(21) Anmeldenummer: 94109381.7
(22) Anmeldetag: 17.06.1994
(51) Int. Cl.: C09D 5/24, H01B 1/12, C08L 75/04

(54) **Zusammensetzungen aus elektrisch leitfähigen Polymeren und Polyurethanen**
Compositions of electrically conductive polymers and of polyurethanes
Compositions de polymères électro-conducteurs et de polyuréthanes

(30) Priorität: 24.06.1993 DE 4321001
(43) Veröffentlichungstag der Anmeldung: 28.12.1994
(73) Patentinhaber: BASF Aktiengesellschaft, 67063 Ludwigshafen (DE)
(72) Erfinder: Sauerer, Wolfgang, Dr., D-68542 Heddesheim (DE); Brodt, Gregor, Dr., D-64646 Heppenheim (DE); Koch, Juergen, Dr., D-67141 Neuhofen (DE); Wagner, Norbert, Dr., D-67112 Mutterstadt (DE)

(56) Entgegenhaltungen:
- EP-A- 0 309 286
- WO-A-91/00314

## Beschreibung

Die vorliegende Erfindung betrifft Zusammensetzungen, die
A) Polymere, die entweder intrinsisch oder nachdem sie dotiert wurden elektrisch leitfähig sind und
B) Polyurethane, erhältlich aus
   a) Polydiolen mit einem Molekulargewicht von 400 bis 10 000,
   b) Gemischen aus
      b₁) mindestens einem Diol mit 2 bis 20 Kohlenstoffatomen und
      b₂) mindestens eine Phosphonat- oder Sulfonatgruppe aufweisenden Diolen,
   c) Tri- oder Polyolen mit 3 bis 25 Kohlenstoffatomen,
   d) Diisocyanaten mit 6 bis 30 Kohlenstoffatomen und
   e) OH-gruppenhaltigen primären oder sekundären Aminoalkoholen, monofunktionellen primären oder sekundären Aminen oder monofunktionellen Alkoholen mit jeweils bis zu 20 Kohlenstoffatomen, wobei das molare Verhältnis der Komponenten a:b:c:d:e 1:0,3 bis 20:0,01 bis 1:1,35 bis 30:0,05 bis 8 beträgt und das Verhältnis der OH-Gruppen der Komponenten a bis c zu den NCO-Gruppen der Komponente d 1:1,03 bis 1:1,4 beträgt
   oder
C) Polyurethane, erhältlich aus den Komponenten a, b₁, d und e, wobei das molare Verhältnis dieser Komponenten 1:0,2 bis 20:1,2 bis 30:0,1 bis 8 beträgt und das Verhältnis der OH- und NH-Gruppen der Komponenten a, b₁ und e zu den NCO-Gruppen der Komponente d 1,05 bis 1,5:1 beträgt
   oder
D) Polyurethane, erhältlich aus den Komponenten a, b₁, c, d und e, wobei das molare Verhältnis dieser Komponenten 1:0,2 bis 20:0,01 bis 1:1,25 bis 34:0,1 bis 8 beträgt und das Verhältnis der OH- und NH-Gruppen in den Komponenten a, b₁, c und e zu den NCO-Gruppen der Komponente d 1,05 bis 1,5:1 beträgt
   oder eine Mischung der Polyurethane B bis D
enthalten. Darüber hinaus betrifft sie ein Verfahren zur Herstellung dieser Mischungen sowie deren Verwendung.

Mischungen elektrisch leitfähiger Polymerer mit Polymeren, die keine elektrische Leitfähigkeit zeigen, sind an sich bekannt. So werden in der US 4 604 427 Beschichtungen beschrieben, die aus derartigen Mischungen, darunter solchen aus Polyurethanen und Polypyrrolen, hergestellt werden.

In der WO 91/00314 werden elektrisch leitfähige Zusammensetzungen offenbart, die aus der Umsetzung von einem Polyol, einem Polyisocyanat und Pyrrol in Gegenwart von Eisen(III)chlorid erhalten werden.

Aufgabe der vorliegenden Erfindung war es, neue Polyurethan-haltige Zusammensetzungen, die elektrisch leitfähige Polymere enthalten und ein ausgewogenes Eigenschaftsprofil aufweisen, zur Verfügung zu stellen.

Diese Aufgabe wird von den eingangs definierten Zusammensetzungen, die neben den Polymeren A die speziellen Polyurethane B, C oder D enthalten, gelöst.

Das Verhältnis der Komponenten A und B bzw. C oder D in den erfindungsgemäßen Zusammensetzungen kann in weiten Grenzen variieren. In der Regel enthalten sie jedoch 0,1 Gew.-% bis 50 Gew.-% Polymeren A und 50 bis 99,9 Gew.-% Polyurethane B bzw. C oder D. Polyurethane B, C oder D mit sehr viel kleineren Anteilen an Polymeren A, beispielsweise solche mit weniger als 0,05 Gew.-% zeigen in den meisten Anwendungen ungenügende Leitfähigkeiten. Solche mit höheren Anteilen als beispielsweise 70 Gew.-% Polymeren A lassen sich meist nicht mehr gut verarbeiten. Bevorzugte Zusammensetzungen enthalten 1 bis 40 Gew.-% Polymere A und 60 bis 99 Gew.-% Polyurethane B, C oder D. Neben den Komponenten A und B bzw. C oder D können die erfindungsgemäßen Zusammensetzungen noch Zusätze wie Verarbeitungshilfsmittel oder Pigmente enthalten.

Diese machen im allgemeinen nicht mehr als 50 Gew.-% bezogen auf die Summe der Komponenten A und B bzw. C oder D aus.

### Komponente A

Erfindungsgemäß sind die Polymere A Polymere, die entweder intrinsisch elektrisch leitfähig sind oder elektrisch leitfähig sind, nachdem sie dotiert wurden. Derartige Polymere sind an sich bekannt oder nach bekannten Methoden erhältlich.

Die Polymere A können sich von Monomeren ableiten, die einen fünfgliedrigen Heterocyclus enthalten. Beispiele hierfür sind Pyrrol, Thiophen oder Furan sowie deren Derivate z.B. benzokondensiertes Thiophen oder Furan. Es kommen daher auch mit Halogenatomen, Alkyl-, Alkylen-, Alkoxy- oder Arylgruppen substituierte Heterocyclen in Betracht. Eine Auswahl geeigneter Heterocyklen ist im folgenden aufgeführt: 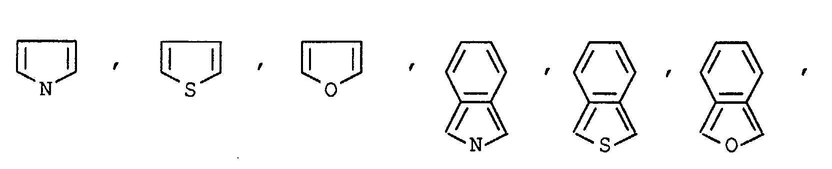 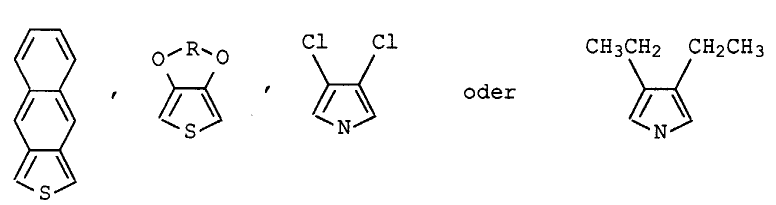 worin R C₁- bis C₁₀-Alkylen bedeutet. Es eignen sich aber auch N-substituierte Pyrrole wie N-Alkylpyrrole. Besonders bevorzugt werden Pyrrol, Thiophen aber auch 3- oder 4-Alkylthiophene, z.B. 3,4-Diethylthiophen. Neben den vorstehend genannten Monomeren können die Polymeren A noch weitere Monomere enthalten, die mit diesen copolymerisieren wie Thiazol, Oxazol oder Imidazol.

Darüber hinaus können sich die Polymeren A auch von Aromaten oder aromatischen Aminoverbindungen oder ihren Derivaten ableiten. Zu den geeigneten Polymeren A zählen Polyphenylen oder Polyanilin.

Des weiteren können die Polymeren A Vinylen oder Arylenvinylenstruktur aufweisen. Hierunter ist Polyphenylenvinylen bevorzugt.

Ganz besonders bevorzugte Polymere A sind Polypyrrol und Polythiophen. Die Polymere A sind entweder intrinsisch elektrisch leitfähig bzw. bereits durch Oxidation durch Luftsauerstoff elektrisch leitfähig oder nachdem sie dotiert, d.h. mit einem Oxidations- oder Reduktionsmittel behandelt bzw. auf elektrochemischem Wege oxidiert oder reduziert wurden. Dabei kann die Dotierung sowohl während der Synthese des Polymeren erfolgen als auch am fertigen Polymeren.

Als Dotierungsmittel eignen sich Peroxosäuren und deren Salze, wie die Peroxodischwefelsäure oder deren Alkali- und Ammoniumsalze. Vorzugsweise werden Peroxoborate, Perchlorate oder Peroxochromate, wie Natriumperborat, Kaliumdichromat, Eisenperchlorat oder Kupferperchlorat verwendet. Außerdem sind Permanganate wie Kaliumpermangat geeignet, wenn man diesen geringe Mengen Säure zusetzt. Auch Wasserstoffperoxid, Bleidioxid oder Mangan(IV)verbindungen sind als Dotierungsmittel geeignet.

Vorzugsweise erfolgt die Umsetzung der Monomeren in Gegenwart von Dotierungsmittel wie KHSO₄, Na₂SO₄, HCOOH, LiClO₄, HClO₄, NEt₄ClO₄, NBu₄ClO₄, KBF₄, K₂ZrF₆, H₂SO₄, FeCl₃, NOPF₆, KAsF₆ oder NaPF₆.

Besonders bevorzugte Dotierungsmittel sind Persulfate, Eisensalze wie FeCl₃ und aromatische Sulfonate wie Eisenstyrolsulfonat oder Eisenbenzolsulfonate z.B. Eisen(III)dodecylbenzolsulfonat oder Eisen(III)benzolsulfonat.

### Komponenten B bis D

Die erfindungsgemäßen Zusammensetzungen enthalten als Komponenten B bis D Polyurethane bzw. eine Mischung verschiedener Polyurethane. Diese sind im allgemeinen in Tetrahydrofuran löslich und haben eine verzweigte Kettenstruktur. Das Molekulargewicht der Polyurethane beträgt im allgemeinen 3 000 bis 300 000, vorzugsweise 4 000 bis 100 000.

Die Kettenenden der Polyurethane können entweder OH-gruppenhaltige oder OH-gruppenfreie Harnstoffgruppierungen sein. Bevorzugt bestehen die Endgruppen der Polyurethane mit Molekulargewichten bis etwa 30 000 zu 80 % und mehr, bevorzugt zu 90 % und mehr aus einem der folgenden Reste 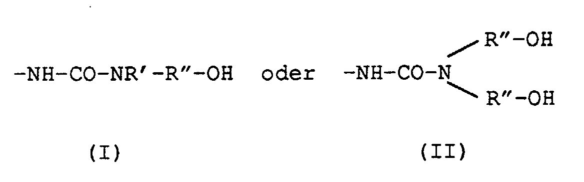 worin R'' -(CH₂)ₙ- und R' Wasserstoff, Methyl oder -(CH₂)ₙ-CH₃ und n eine ganze Zahl von 1 bis 10 bedeuten.

Die Polyurethane haben im allgemeinen im unvernetzten Zustand eine Härte nach DIN 53 157 von 15 bis 140 s. Sie weisen ferner in der Regel einen E-Modul (Elastizitätsmodul gemäß DIN 53 457) von 20 bis 2500, bevorzugt 50 bis 2000 N mm⁻², eine Reißdehnung größer 70 %, bevorzugt 80 bis 500 %, (DIN 53455) und eine Reißfestigkeit von 25 bis 70, bevorzugt 25 bis 50, (DIN 53 455) auf. Die Polyurethane B haben in der Regel einen Erweichungspunkt von 80 bis 180°C.

Als vorteilhaft hat es sich erwiesen die Polyurethane mit Isocyanaten zu vernetzen. Für diese Vernetzung kann eine Vielzahl organischer Di-, Tri- oder Polyisocyanate oder Isocyanatprepolymerer mit einem Molekulargewicht von bis zu 10000, vorzugsweise von 500 bis 3000 verwendet werden. Bevorzugt sind Polyisocyanate bzw. Isocyanatprepolymere, die mehr als zwei Isocyanatgruppen pro Molekül haben. Besonders bevorzugt werden Polyisocyanate auf Basis von Toluylendiisocyanat, Hexamethylendiisocyanat oder Isophorondiisocyanat, die durch Polyaddition an Di- oder Triole oder durch Biuret- oder Isocyanuratbildung entstehen, eingesetzt. Darunter wird das Additionsprodukt von Toluylendiisocyanat an Trimethylolpropan und Diethylenglykol besonders bevorzugt. Die Menge an zugesetzten Isocyanaten beträgt im allgemeinen 0,01 bis 20 Gew.-%, insbesondere 1 bis 10 Gew.-% bezogen auf die Polyurethane.

Die Polyurethane werden aus den an sich bekannten Komponenten a bis e aufgebaut.

### Komponente a

Zur Herstellung der Polyurethane B wird als Komponente a ein Polydiol mit einem Molekulargewicht von 400 bis 10000, bevorzugt von 500 bis 2500, eingesetzt. Hierzu eignen sich die bekannten Polyesterole, Polyetherole, Polycarbonatdiole und Polycaprolactondiole.

Die Polyesterole sind zweckmäßigerweise überwiegend lineare Polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher Weise durch Veresterung von aliphatischen oder aromatischen Dicarbonsäuren mit 4 bis 15 C-Atomen, vorzugsweise 4 bis 6 C-Atomen, mit Glykolen, bevorzugt Glykolen mit 2 bis 25 C-Atomen oder durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure, Bernsteinsäure und Phthalsäuren einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Geeignete aromatische Dicarbonsäuren sind Terephthalsäure, Isophthalsäure oder Mischungen aus diesen mit anderen Dicarbonsäuren, z.B. Diphensäure, Sebacinsäure, Bernsteinsäure und Adipinsäure. Beispiele für geeignete Glykole sind Diethylenglykol, 1,5-Pentandiol, 1,10-Decandiol und 2,2,4-Trimethylpentandiol-1,5. Vorzugsweise verwendet werden 1,2-Ethandiol, 1,4-Butandiol, 1,6-Hexandiol, 2,2-Dimethylpropandiol-1,3, 1,4-Dimethylolcyclohexan, 1,4-Diethanolcyclohexan oder ethoxilierte/propoxilierte Produkte des 2,2-Bis-(4-hydroxyphenylen)-propan (Bisphenol A). Je nach den gewünschten Eigenschaften der Polyurethane können die Polyole alleine oder als Mischung in verschiedenen Mengen-verhältnissen verwendet werden. Als Lactone für die Herstellung der Polyesterole eignen sich z.B. α,α-Dimethyl-β-propiolacton, γ-Butyrolacton und vorzugsweise ε-Caprolacton.

Die Polyetherole sind im wesentlichen lineare, endständige Hydroxylgruppen aufweisende Substanzen, die Etherbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran, oder durch Umsetzung von einem oder mehreren Alkylenoxiden mit 2 bis 4 Kohlenstoffaomen im Alkylenrest mit einem Startermolekül, das zwei aktive Wasserstoffatome im Alkylenrest gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die Alkylenoxide können einzeln, alternierend nacheinander oder als Mischung verwendet werden. Als Startermoleküle kommen beispielsweise in Betracht: Wasser, Glykole, wie Ethylenglykol, Propylenglykol, 1,4-Butandiol und 1,6-Hexandiol, Amine, wie Ethylendiamin, Hexamethylendiamin und 4,4'-Diamino-diphenylmethan und Aminoalkohole, wie Ethanolamin. Ebenso wie die Polyesterole können auch die Polyetherole allein oder in Mischungen verwendet werden.

Die Polycarbonatdiole sind ebenso wie ihre Herstellung in der US-A 4 131 731 beschrieben, sie sind im allgemeinen auf Hexandiol-1,6-Basis aufgebaut.

### Komponente b₁

Als Baustein b₁ werden Diole mit 2 bis 20 Kohlenstoffatomen, vorzugsweise 2 bis 10 C-Atomen, eingesetzt, so z.B. 1,2-Ethandiol, 1,3-Propandiol, 1,4-Butandiol, 1,6-Hexandiol, 1,5-Pentandiol, 1,10-Decandiol, 2-Methyl-1,3-propandiol, 2-Methyl-2-butyl-1,3-propandiol, 2,2-Dimethyl-1,4-butandiol, 2-Methyl-2-butyl-1,3-propandiol, Hydroxypivalinsäureneopentylglykolester, Diethylenglykol, Triethylenglykol und Methyldiethanolamin. Die Diole können einzeln oder als Gemische verwendet werden. In untergeordnetem Maße können auch Diamine mit 2 bis 15 Kohlenstoffatomen wie Ethylendiamin, 1,6-Hexamethylendiamin, 4,9-Dioxododecan-1,12-diamin, 4,4'-Diaminodiphenylmethan oder Aminoalkohole wie z.B. Monoethanolamin, Monoisopropanolamin und 2-Amino-2-methylpentan-2-ol eingesetzt werden. Hierbei hat es sich als vorteilhaft erwiesen, die dabei entstehenden Harnstoffgruppen in die Polymerkette einzubauen. Die Harnstoffgruppen am Kettenende sind hierbei von untergeordneter Bedeutung.

In gleicher Weise können als Bausteine b₁ die genannten Diole auch ganz oder teilweise durch Wasser ersetzt werden.

### Komponente b₂

Die die Komponente b₂ bildenden Diole enthalten mindestens eine Phosphonat- oder Sulfonatgruppe. Zu den geeigneten Diolen zählen, die der allgemeinen Formel III bis V wie sie in der DE-A 3 407 562 beschrieben sind:

(HOR¹) (HOR²)N-R³-Q (III)

(HOR¹) (HOR²)CR³-R⁴-Q (IV)

worin
- Q: 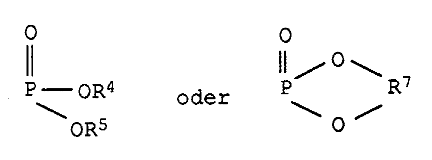 bedeutet und R¹ bis R⁷ unabhängig voneinander Alkyl, Cycloalkyl, Aryl, Alkenyl oder Alkinyl mit jeweils 1 bis 20 Kohlenstoffatomen bedeutet,

R⁸CH₂O(C₂H₄O)ₙ-(C₃H₇O)ₘCH₂CHR⁹CH₂-SO₃M (V),
worin
- R⁸: 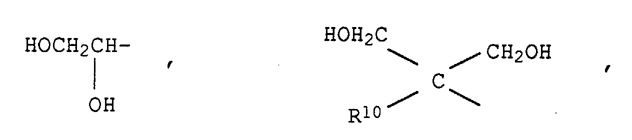
- R⁹: H- oder CH₃-
- R¹⁰: CH₃-, C₂H₅-, C₃H₇-
- M: H-, Alkali- oder Ammonium,
- n: 0 bis 100
- m: 0 bis 50 und
- n + m: ≥ 1 ist.

Daneben kommen Diole der allgemeinen Formel VI, wie sie teilweise in der DE-A 39 27 630 beschrieben sind in Betracht: 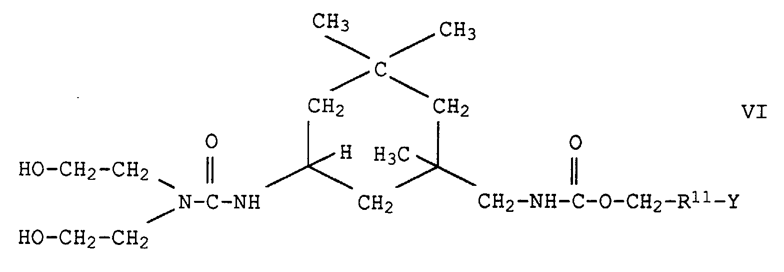 in welcher
- R¹¹: einen geradkettigen oder verzweigten oder cyclischen Rest R^{a} mit 1 bis 40 Kohlenstoffatomen und mit einem gewichtsmäßigen Anteil der Kohlenstoffatome zwischen 20 und 86 % bedeutet oder einen Rest R^{b} der allgemeinen Formel 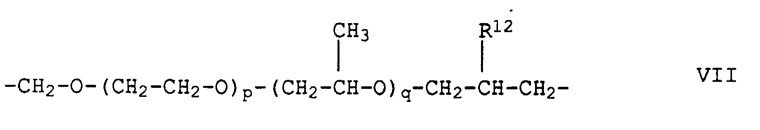 worin R¹² die gleiche Bedeutung wie R⁹ und p und q die gleiche Bedeutung wie n und m haben und p+q ≥ 1 ist und Y die gleiche Bedeutung wie Q hat oder -SO₃M bedeutet.

Ferner kann die Komponente b₂ auch ein Diol der allgemeinen Formel VIII sein 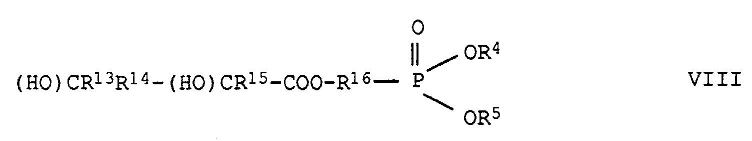 worin R¹³ bis R¹⁵ die gleiche Bedeutung wie R^{a} haben und R¹⁶ die gleiche Bedeutung wie R¹¹ hat.

### Komponente c

Die Triole für die Komponente c sind Verbindungen mit 3 bis 10, vorzugsweise 3 bis 6 C-Atomen. Beispiele für entsprechende Triole sind Glycerin oder Trimethylolpropan. Geeignet sind auch niedermolekulare Umsetzungsprodukte von z.B. Trimethylolpropan mit Ethylenoxid und/oder Propylenoxid. Das Vorhandensein von Triolen bei der Polyaddition führt zu einer Verzweigung des Endprodukts, was sich, sofern keine örtliche Vernetzung auftritt, positiv auf die mechanischen Eigenschaften des Polyurethans B auswirkt. Als Polyole lassen sich hierbei beispielsweise Erythrit, Pentaerythrit und Sorbit einsetzen.

### Komponente d

Zur Bildung der NCO-gruppenhaltigen Zwischenprodukte werden die Komponenten a, b und c mit aliphatischen, cycloaliphatischen oder aromatischen Diisocyanaten mit 6 bis 30 C-Atomen (Komponente d) umgesetzt. Hierfür eignen sich Verbindungen wie Toluylen-2,4-diisocyanat, Toluylen-2,6-di-isocyanat, m- bzw. p-Tetramethylyloldiisocyanat, m-Phenylendiisocyanat, 4-Chlor-1,3-phenylendiisocyanat, 1,5-Naphthylendiisocyanat; 1,5-Hexamethylendiisocyanat, 1,6-Hexamethylendiisocyanat, 1,4-Cyclohexylendiisocyanat und 1,5-Tetrahydronaphthylendiisocyanat, 4,4'-Diphenylmethandiisocyanat, Dicyclohexylmethandiisocyanat, Isophorondiisocyanat oder Gemische davon.

### Komponente e

Danach werden die NCO-gruppenhaltigen Zwischenprodukte aus den Komponenten a bis d mit den Aminoalkoholen (Komponente e) zu den Polyurethanen B umgesetzt. Diese Aminoalkohole mit 2 bis 20, vorzugsweise 3 bis 6 C-Atomen sind u. a. Monoethanolamin,Methylisopropanolamin, Ethylisopropanolamin, Methylethanolamin, 3-Aminopropanol, 1-Ethylaminobutanol-2, 4-Methyl-4-aminopentanol-2, N-(2-Hydroxyethyl)anilin. Diolamine sind besonders geeignet, da durch ihre Anlagerung am Kettenende die OH-Zahl der Polymeren verdoppelt wird. Als besonders günstig haben sich Diethanolamin und Diisopropanolamin erwiesen.

Als Komponente e sind außerdem OH-gruppenfreie monofunktionelle primäre oder sekundäre Amine (Monoamine) mit 2 bis 20 Kohlenstoffatomen einsetzbar. Monoamine im Sinne der Erfindung sind Verbindungen, welche eine NH- oder NH₂-Gruppierung aufweisen. Beispielhaft seien die bekannten Alkylmonoamine, Dialkylamine oder Diphenylamine genannt, wobei sich insbesondere das Dibutylamin als vorteilhaft herausgestellt hat.

Als Komponente e können neben Aminoalkoholen auch monofunktionelle Alkohole mit 1 bis 20 Kohlenstoffatomen eingesetzt werden. Diese können sowohl verzweigt als auch linear sein. Als Beispiele sind Methanol, Ethanol, n-Propanol, i-Propanol, n-Butanol, i-Butanol, t-Butanol, Amylalkohol, n-Hexanol oder n-Decanol zu nennen.

Bevorzugt werden die Polyurethane in Lösung in einem 2-Stufenverfahren und falls erforderlich in Gegenwart von Katalysatoren und anderen Hilfsmitteln und/oder Zusatzstoffen hergestellt. Hierbei können die Komponenten a bis d in unterschiedlicher Reihenfolge bei Temperaturen von 20 bis 90°C miteinander umgesetzt werden. Die Reaktion wird jeweils durch Zugabe der Komponente e abgestoppt, nachdem die gewünschte Endviskosität erreicht wurde.

Als Lösungsmittel für die Herstellung der Polyurethane B wird vorzugsweise Tetrahydrofuran verwendet. Selbstverständlich können je nach Anwendungsgebiet die Polyurethane auch in anderen polaren Lösungsmitteln, wie Dioxan, Cyclohexanon, Dimethylformamid, N-Methylpyrrolidon, Dimethylsulfoxid oder Ethylglykolacetat hergestellt werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane B und für die Vernetzungsreaktion seien beispielhaft genannt: tert.-Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommenden Katalysators. Im allgemeinen hat sich als zweckmäßig erwiesen, 0,005 bis 0,3 Gewichtsteile für jeweils 100 Gewichtsteile, vorzugsweise 0,01 bis 0,1 Gewichtsteile für jeweils 100 Gewichtsteile Polyurethan B zu verwenden.

Die Polyurethane B, C und D unterscheiden sich dadurch, daß sie sich in unterschiedlicher Weise aus den Komponenten a bis e zusammensetzen.

### Komponente B

Die Polyurethane B sind aus den Komponenten a:b:c:d:e erhältlich. Dabei beträgt das molare Verhältnis der Komponenten a bis e 1:0,3 bis 20:0,01 bis 1:1,35 bis 30:0,05 bis 8. Hierbei beträgt das Verhältnis der OH-Gruppen der Komponenten a bis c zu den NCO-Gruppen der Komponente d 1:1,03 bis 1:1,4. Bevorzugt beträgt das molare Verhältnis der Komponenten a:b:c:d:e 1:1 bis 10:0,01 bis 0,2:2,1 bis 14,6:0,2 bis 3,1. Besonders bevorzugt beträgt das Verhältnis der OH-Gruppen der Komponenten a bis c zu den NCO-Gruppen der Komponente d 1:1,05 bis 1,2. In der Regel weisen dabei die Polyurethane B, deren Molekulargewicht bis ca. 30000 beträgt eine OH-Zahl von 25 bis 75, vorzugsweise 30 bis 70 auf. Polyurethane B mit höheren Molekulargewichten als 30000, insbesondere solche mit Molekulargewichten von 60000 bis 90000 weisen in der Regel 1 bis 30, bevorzugt 2 bis 10, insbesondere 2 bis 8 OH-Zahl auf. Eine OH-Zahl von wesentlich mehr als 30 führt bei Polyurethanen B mit hohen Molekulargewichten in der Regel dazu, daß die Polyurethane B zu stark verzweigen, wodurch deren Verarbeitung erschwert wird.

### Komponente C

Die Polyurethane C sind aus den Komponenten a, b₁, d und e erhältlich. Pro Mol Polydiole a werden 0,2 bis 20, vorzugsweise 1 bis 5 Mol der Diole b₁, 1,2 bis 30 Mol, bevorzugt 2,2 bis 2,1 Mol der Diisocyanate d und 0,1 bis 8 Mol, bevorzugt 0,2 bis 4 Mol der Aminoalkohole e eingesetzt. Dabei beträgt das Verhältnis der OH- und NH-Gruppen der Komponenten a, b₁ und e zu den NCO-Gruppen der Komponente d 1,05 bis 1,5:1, insbesondere 1,1 bis 1,4:1.

Die Polyurethane C weisen im allgemeinen OH-Zahlen von 10 bis 120, bevorzugt 20 bis 100 auf. Dabei haben höhermolekulare Polyurethane C, d.h. solche mit Molekulargewichten (Zahlenmittelwerte) von ca. 40 000 in der Regel OH-Zahlen von 1 bis 40, bevorzugt von 2 bis 10 und solche mit niedrigeren Molekulargewichten im allgemeinen von 20 bis 120, bevorzugt 30 bis 80.

### Komponente D

Die, die Komponente D bildenden Polyurethane D können aus den Komponenten a, b₁, c, d und e hergestellt werden. Das molare Verhältnis dieser Komponenten beträgt 1:0,2 bis 20:0,01 bis 1:1,25 bis 34:0,1 bis 4, vorzugsweise ist das molare Verhältnis 1:1 bis 10:0,01 bis 0,2:2,4 bis 21,3:0,2 bis 4.

Das Verhältnis der OH- und NH-Gruppen der Komponenten a, b₁, c und e zu den NCO-Gruppen beträgt 1,05 bis 1,5:1, bevorzugt 1,1 bis 1,4:1.

Die OH-Zahl dieser Polyurethane ist im allgemeinen 10 bis 120, bevorzugt 20 bis 100. Dabei haben die höhermolekularen Polyurethane D, d.h. solche mit Molekulargewichten (Zahlenmittelwert) von ca. 40 000 in der Regel eine OH-Zahl von 1 bis 40, bevorzugt 2 bis 10. Solche mit niedrigeren Molekulargewichten haben im allgemeinen eine OH-Zahl von 20 bis 120, bevorzugt 30 bis 80.

### Erfindungsgemäße Zusammensetzungen

Die erfindungsgemäßen Zusammensetzungen können dadurch hergestellt werden, daß man die Polymeren B, C oder D oder deren Mischungen mit Lösungen oder Dispersionen der Polymeren A behandelt und anschließend das Lösungs- oder Dispersionsmittel entfernt. Dabei können die Polymeren A entweder bereits vor der Herstellung der Mischung oder danach dotiert werden. Hierbei können die Polymeren B, C oder D oder deren Mischungen in fester Form vorliegen und beispielsweise in die Lösung der Polymeren A eingetaucht werden. Es ist aber bevorzugt, Lösungen oder Dispersionen der Polymeren B, C oder D oder deren Mischungen mit denen der Polymeren A zu mischen.

Vorzugsweise werden die erfindungsgemäßen Zusammensetzungen dadurch hergestellt, daß man die Monomeren, von denen sich die Polymeren A ableiten, in Gegenwart der Polymeren B, C oder D oder deren Mischungen zu den Polymeren A umsetzt. Die Polymeren B, C oder D bzw. deren Mischungen können dabei fest, z.B. pulverförmig oder filmförmig, bevorzugt gelöst oder dispergiert vorliegen. Sie können beispielsweise mit den Monomeren oder Lösungen oder Dispersionen der Monomeren gemischt, getränkt, in diese getaucht oder mit gasförmigen Monomeren bedampft werden. Die Polymeren B, C oder D bzw. deren Mischungen können aber auch z.B. zunächst mit einem Dotierungsmittel und dann wie oben mit den Monomeren behandelt werden. Ebenso ist es möglich, die Polymeren B, C oder D bzw. deren Mischungen gleichzeitig mit den Monomeren und einem Dotierungsmittel zu behandeln. Hierzu können die Polymeren B, C oder D bzw. deren Mischungen beispielsweise in eine Lösung, die sowohl Monomere als auch Dotierungsmittel enthält, getaucht werden. Falls erforderlich, können die Lösungs- oder Dispersionsmittel vor der Umsetzung der Monomeren zu den Polymeren A entfernt werden. Die Umsetzung der Monomeren kann sowohl auf chemischem als auch elektrochemischem Wege erfolgen.

Besonders bevorzugt wird die Polymerisation der Monomeren in Gegenwart eines Oxidationsmittels oder durch elektrochemische Oxidation vorgenommen. Hierbei kann das Oxidationsmittel bzw. der elektrische Strom gleichzeitig als Dotierungsmittel fungieren. Im allgemeinen werden 0,1 bis 10 Redoxequivalente pro Monomer verwendet. Vorzugsweise werden 1 bis 5, insbesondere 2 bis 3 Redoxequivalente verwendet.

Als Lösungsmittel für die Monomeren oder die Polymeren B, C oder D bzw. deren Mischungen kommen vor allem polare organische oder anorganische Flüssigkeiten in Betracht. Zu diesen zählen Wasser, Aceton, Acetonitril, Dimethylformamid, bevorzugt Alkohole, insbesondere Methanol, Ethanol, n-Propanol und i-Propanol. Es können auch Lösungsmittelgemische verwendet werden. Bei der Umsetzung der Monomeren auf elektrochemischem Wege enthalten die Lösungsmittel im allgemeinen Leitsalze wie Lithiumperchlorat, Lithiumtetrafluoroborat, LiPF₆ oder Tetraalkylammoniumsalze aromatischer Sulfon- oder Carbonsäuren oder die freien Säuren selbst.

Die erfindungsgemäßen Zusammensetzungen eignen sich insbesondere als Beschichtungen von Oberflächen. Die Oberflächen können dabei auf unterschiedlichste Weise und Reihenfolge mit den Polymeren B, C oder D bzw. deren Mischungen, den Polymeren A oder Monomeren, von denen sich die Polymeren A ableiten und gegebenenfalls Dotierungsmittel, behandelt werden. Beispielsweise kann die Oberfläche zunächst mit einem Dotierungsmittel und dann mit einer Lösung von Monomeren und Polymeren B, C oder D bzw. deren Mischungen behandelt werden. Die Oberfläche kann aber auch z.B. zunächst mit Monomeren und anschließend mit einer Lösung des Polyurethans und Dotierungsmittel behandelt werden. Ebensogut kann die Oberfläche ein als Anode geschalteter elektrisch leitender Träger sein, der in eine, die Polymeren B, C oder D bwz. deren Mischungen und die Monomeren enthaltende Lösung getaucht und durch Anlegen einer elektrischen Spannung beschichtet wird.

Vorzugsweise können derartige Beschichtungen dadurch hergestellt werden, daß die Polymeren B, C oder D bzw. deren Mischungen auf eine Oberfläche aufgebracht und anschließend die Monomeren in Gegenwart der auf der Oberfläche fixierten Polymeren B, C oder D bzw. deren Mischungen wie oben beschrieben zu den Polymeren A umgesetzt werden.

Die Polymeren B, C oder D bzw. deren Mischungen können z.B. dadurch auf die Oberfläche aufgebracht werden, daß ihre Lösungen auf die zu beschichtende Oberfläche aufgestrichen, aufgerakelt, aufgesprüht oder im Spin-Coating- oder im Walzendruckverfahren aufgebracht und anschließend die Lösungsmittel entfernt werden. Beim Aufbringen der Copolymeren B kann die Oberfläche teilweise durch eine abnehmbare Maske abgedeckt sein, wodurch strukturierte Beschichtungen erhalten werden können.

Als zu beschichtende Oberflächen kommen sowohl vielfältige anorganische als auch organische Materialien in Betracht. Beispiele hierfür sind Metalle, Glas und polymere Materialien. Zu den geeigneten Oberflächen zählen Glasplatten, Platten aus ITO -Glas, Glasfasern, Folien aus Teflon, Polyolefinen oder Polyestern. Besonders gut eignen sich die erfindungsgemäßen Mischungen als Beschichtungen von Oberflächen, die sich normalerweise nur schwer beschichten lassen, d.h. für deren Beschichtung beispielsweise lange Beschichtungsdauern oder Quellvorgänge nötig sind. Dies sind vor allem Glas und Materialien auf der Basis von Polyestern. Oberflächen aus diesen Materialien können mit den erfindungsgemäßen Mischungen in sehr kurzer Zeit beschichtet werden.

Die erfindungsgemäßen Mischungen eignen sich zum Herstellen von Bauteilen auf dem Gebiet der Elektrotechnik oder Elektronik, aber auch zum Herstellen elektrischer oder elektrooptischer Bauteile. Weiterhin eignen sich die erfindungsgemäßen Mischungen zum Herstellen von Korrosionsschutzlacken.

Die erfindungsgemäßen Beschichtungen zeichnen sich durch gute Oberflächenwiderstände und Leitfähigkeiten sowie eine hohe Abrieb- und Haftfestigkeit aus und eignen sich für Formkörper, Folien oder Fasern.

### Beispiele

### Anwendungstechnische Prüfungen

Der Oberflächenwiderstand wurde mittels der Zweipunkt-Methode mit einem Digital-Multimeter des Typs H 2032 (ABB Metrawatt) bestimmt. Der Abstand der beiden Elektroden (4 mm Klinkenstecker), die während der Messung auf die beschichtete Oberfläche aufgesetzt wurden, betrug 5 mm.

Der Oberflächenwiderstand und die spezifische Leitfähigkeit σ wurden auch in Anlehnung an die von L.B. Valdes in "Proceedings of the I.R.E. 42 (1954) 420 beschriebene Methode ermittelt. Hierzu wurde der 4-Elektroden-Meßkopf S 301 der Firma Signatone verwendet. Die Schichtdicke wurde mittels eines Digitalmikrometers der Firma Mitutoyo, mit einer Auflösung von 1 µm, bestimmt.

### Herstellung der Polyurethane (Komponente C)

### Beispiel 1

36,07 kg eines Poly(hexamethylencarbonat)diols eines Molekulargewichts (Zahlenmittelwert) von 2000 (z.B. Handelsprodukt Desmophen® D 2020E der Firma Bayer), 31,18 kg 1,1'-Isopropyliden-bis(p-phenylen-oxy-2-ethanol) (z.B. Handelsprodukt Dianol® 22 der Firma Akzo), 360 g Trimethylolpropan und 31,7 kg Diphenylmethan-4,4'-diisocyanat wurden in 30 kg Tetrahydrofuran (THF) gelöst und auf ca. 55°C erwärmt. Die Komponenten wurden bis zu einer Endviskosität von 1,8 Pas umgesetzt und anschließend mit 36,667 kg Tetrahydrofuran auf einen Feststoffgehalt von 15 % verdünnt. Gleichzeitig wurde die Reaktion durch Zugabe von 700 g Diethanolamin gestoppt. Der K-Wert (Fikentscher-Viskositätsindex) des Polyurethans betrug ca. 59, gemessen in 1 gew.-%iger Lösung im Dimethylformamid. Das Polyurethan hatte eine OH-Zahl von 8, bestimmt gemäß DIN 53 240.

### Beispiel 2

Der Versuch wurde entsprechend Beispiel 1 durchgeführt jedoch wurden als Komponenten
- 1,499 kg: des Poly(hexamethylencarbonat)diols,
- 2,293 kg: Neopentylglykol,
- 36 g: Trimethylolpropan,
- 6,088 kg: Diphenylmethan-4,4'-diisocyanat und
- 85 g: Diethanolamin
verwendet. Die Endviskosität betrug 1,6 Pas. Das Produkt hatte einen K-Wert von ca. 59, gemessen in 1 gew.-%iger Lösung in Dimethylformamid und eine OH-Zahl von 9.

### Beispiel 3

Der Versuch wurde entsprechend Beispiel 1 durchgeführt, jedoch wurden als Komponenten
- 5,6222 kg: eines Polyesterdiols aus Adipinsäure und 1,4-Butandiol eines Molekulargewichtes (Zahlenmittelwert) von 1100,
- 663 g: 1,4-Butandiol,
- 36 g: Trimethylolpropan,
- 3,597 kg: Diphenylmethan-4,4'-diisocyanat und
- 82 g: Diethanolamin
verwendet. Die Endviskosität betrug 2,5 Pas. Das Produkt hatte einen K-Wert von ca. 64, gemessen in 1 gew.-%iger Lösung in Dimethylformamid und eine OH-Zahl von 5.

### Herstellung der erfindungsgemäßen Zusammensetzung

### Beispiel 4

Eine Lösung von 10 g sublimiertem Eisen(III)-chlorid in 60 ml THF wurde mit der nach Beispiel 1 hergestellten Polyurethanlösung gemischt. Diese Mischung wurde mittels einer Filmstreichmaschine auf eine mit Ethanol gereinigte Polyesterfolie der Größe 10 x 10 cm (z.B. Handelsprodukt Mylar® der Firmen DuPont) als Naßfilm einer Dicke von 400 µm aufgetragen. Die so beschichtete Folie wurde 2 min bei Raumtemperatur getrocknet und anschließend 3 min auf 70°C erwärmt. Danach wurde sie in den Gasraum einer mit Pyrrol und Wasserdampf gesättigten Kammer eingebracht und dort bei Raumtemperatur 15 min belassen. Nach erneuter Trocknung bei 70°C (5 min), Waschen mit Wasser und Trocknung bei 70°C (5 min) wurde an der abriebfesten, sehr gleichmäßigen schwarzen Beschichtung ein Oberflächenwiderstand von ca. 1 kΩ und eine spezifische Leitfähigkeit von ca. 0,3 Scm⁻¹ (4-Punkt-Methode) ermittelt. Die Beschichtung war gegen Wasser und Alkohole beständig.

### Beispiel 5

Der Versuch wurde entsprechend Beispiel 4 ausgeführt, jedoch wurde anstelle der Polyester-Folie eine Zylinder aus Teflon mit einem Durchmesser von 10 mm und einer Länge von 10 cm beschichtet. Der Oberflächenwiderstand der Beschichtung betrug 100 kΩ (2-Punkt-Methode).

### Beispiel 6

Der Versuch wurde entsprechend Beispiel 5 ausgeführt, jedoch war der Zylinder aus Silikon. Der Oberflächenwiderstand der Beschichtung betrug 400 kΩ (2-Punkt-Methode)

### Beispiel 7

Der Versuch wurde entsprechend Beispiel 4 durchgeführt, jedoch wurde eine Aluminiumblech der Größe 70 x 100 mm beschichtet. Der Oberflächenwiderstand der Beschichtung betrug ca. 1 MΩ (2-Punkt-Methode).

### Beispiel 8

Der Versuch wurde entsprechend Beispiel 4 durchgeführt, jedoch wurde ein Fensterglasplatte (50 x 50 mm) in die Mischung aus Polyurethan und Eisen(III)chlorid in THF getaucht und so beschichtet. Der Oberflächenwiderstand der Beschichtung betrug 500 kΩ (2-Punkt-Methode).

### Beispiel 9

Der Versuch wurde entsprechend Beispiel 8 durchgeführt, jedoch wurde ein Zylinder (Durchmesser 10 mm, Länge 100 mm) aus Polyethylen verwendet. Der Oberflächenwiderstand der Beschichtung betrug 35 kΩ (2-Punkt-Methode).

### Beispiel 10

Eine mit Ethanol gereinigte 10 x 10 cm große Polyesterfolie (z.B. Mylar) wurde in die nach Beispiel 1 erhältliche Polyurethanlösung getaucht. Die so beschichtete Folie wurde bei 70°C getrocknet und anschließend 10 min in eine Mischung von 200 ml einer 35 gew. -%igen Lösung von Pyrrol in Ethanol und 300 ml einer 3 gew. -%igen Lösung von Natriumperoxodisulfat in Wasser eingelegt. Danach wurde die Folie bei 70°C getrocknet, mit Wasser und Ethanol gewaschen und nochmals bei 70°C getrocknet. Der Oberflächenwiderstand der Beschichtung betrug 35 kΩ (2-Punkt-Methode).

### Beispiel 11

Eine aus einer korrosionsbeständigen Legierung (z.B. Handelsprodukt Hastelloy® C4 der Firma Cabot, USA) gefertigte Plattenelektrode (7 x 10 cm) wurde gleichmäßig mit einem Film des nach Beispiel 1 hergestellten Polyurethans überzogen und anschließend als Anode zu eine Elektrolysezelle eingebracht. Diese enthielt als Elektrolyt eine 0,1 molare Lösung von Lithiumperchlorat in einer Mischung aus 99 Gew.-% Acetonitril und 1 Gew.-% Wasser sowie eine 0,2 molare Lösung von Pyrrol in diesem Acetonitril/Wasser-Gemisch. Nachdem die Zelle 5 min lang equilibriert worden war, wurde die Elektrolyse bei einer Stromdichte von 2 mA/cm² durchgeführt. Innerhalb von 10 min bildete sich eine 9 µm dicke Beschichtung, deren spezifische Leitfähigkeit 67 S cm⁻¹ aufwies. Die Beschichtung war so haftfest, daß sie zerstört werden mußte, wenn sie von der Oberfläche abgezogen werden sollte.

### Beispiel 12

Eine aus einer korrosionsbeständigen Legierung (z.B. Hastelloy C4) gefertigte Plattenelektrode (7 x 10 cm) wurde als Anode in eine Elektrolysezelle eingebracht. Diese enthielt als Elektrolyt eine 0,1 molare Lösung von Lithiumperchlorat in einer Mischung aus 99 Gew.-% Acetonitril und 1 Gew.-% Wasser sowie eine 0,2 molare Lösung von Pyrrol und eine 20 gew.-%ige Lösung der nach Beispiel 1 hergestellten Polyurethanlösung in diesem Lösungsmittelgemisch. Die Elektrolyse wurde bei einer Stromdichte von 2 mA/cm² durchgeführt. Binnen 10 Minuten bildete sich eine 10 µm dicke Beschichtung mit einer spezifischen Leitfähigkeit von 45 S/cm, (4-Punkt-Messung) die so haftfest war, daß sie nur zerstört abgelöst werden konnte.

### Beispiel 13

- Lösung 1:: 2 g Pyrrol und 20 g THF und 20 g der nach Beispiel 2 hergestellten Polyurethanlösung
- Lösung 2:: 3 g sublimiertes Eisen(III)chlorid und 20 g THF und 20 g der nach Beispiel 2 hergestellten Polyurethanlösung

Lösung 1 und 2 wurden gemischt. Anschließend wurde eine mit Ethanol gereinigte 10 x 10 cm große Polyesterfolie (z.B. Mylar) in diese Mischung getaucht. Danach wurde sie 2 min bei Raumtemperatur und dann 5 min bei 80°C unter Stickstoffatmosphäre getrocknet. Die Beschichtung wies einen Oberflächenwiderstand von 100 kΩ (2-Punkt-Messung) auf und war so haftfest, daß er nur zerstört abgelöst werden konnte. Die Beschichtung war gegen Wasser und Alkohole beständig.

### Beispiel 14

Der Versuch wurde entsprechend Beispiel 13 durchgeführt, jedoch wurde die Polyesterfolie erst nach 1 h in die Mischung getaucht. Es wurde eine Beschichtung erhalten, deren Oberflächenwiderstand 100 kΩ (2-Punkt-Methode) aufwies.

### Beispiel 15

- Lösung 1:: 2 g Pyrrol und 40 g THF und 20 g der nach Beispiel 3 hergestellten Polyurethanlösung
- Lösung 2:: 3 g sublimiertes Eisen(III)chlorid und 40 g THF und 20 g der nach Beispiel 3 hergestellten Polyurethanlösung
1 ml der Lösung 1, 9 ml der Lösung 2 und 10 ml THF wurden miteinander gemischt. Anschließend wurde der Versuch entsprechend Beispiel 13 durchgeführt. Man erhielt eine transparente haft- und abriebfeste Beschichtung, die gegen Wasser und Alkohole beständig war und einen Oberflächenwiderstand von 30 kΩ (2-Punkt-Methode) aufwies.

### Beispiel 16

Der Versuch wurde entsprechend Beispiel 15 durchgeführt, jedoch wurde die Polyesterfolie erst nach 50 min in die Mischung getaucht. Es wurde eine transparente Beschichtung erhalten, deren Oberflächenwiderstand 100 kΩ (2-Punkt-Messung) betrug.

### Vergleichsbeispiele

### Vergleichsbeispiel 1

Vier mit Ethanol gereinigte Folien a bis d aus Polyester (z.B. Mylar) der Größe 10 x 10 cm wurden 60 min lang bei Raumtemperatur in jeweils 100 ml einer 30 gew.-%igen Lösung von Eisen(III)chlorid in Wasser getaucht und anschließend bei 70°C getrocknet. Danach wurde Folie a in den Gasraum einer mit Pyrrol- und Wasserdampf gesättigten Kammer eingebracht und dort bei Raumtemperatur 60 min lang belassen. Folie b wurde wie Folie a behandelt, jedoch war der Pyrroldampf wasserfrei. Folien c und d wurden jeweils 60 min bei Raumtemperatur in eine 10 gew.-%ige ethanolische Lösung von Pyrrol bzw. flüssiges Pyrrol getaucht. In keinem Fall konnte die Bildung von Polypyrrol oder leitfähigen Beschichtungen beobachtet werden.

### Vergleichsbeispiel 2

Mehrere mit Aceton gereinigte Folien aus Polyester (z.B. Mylar) wurden bei Raumtemperatur 1 min lang in jeweils 5 gew.-%ige Lösungen von Pyrrol in Ethanol, Ethylenglykol, Cyclohexanol, Dimethylformamid, N-Methylpyrrolidon, Dimethylsulfoxid, Acetonitril, Aceton, Methylethylketon, Nitromethan, Butyrolacten, Propylencarbonat, Diethylether, Tetrahydrofuran, Cyclohexan oder Wasser getaucht. Nach dem Trocknen bei 70°C an der Luft wurden die Folien jeweils bei Raumtemperatur in eine 5 gew.-%ige wäßrige Eisen(III)chloridlösung getaucht. Auch nach 120 Minuten konnte in keinem Fall die Bildung von Polypyrrol oder leitfähigen Schichten beobachtet werden.

### Vergleichsbeispiel 3

Der Versuch wurde entsprechend Beispiel 10 durchgeführt, jedoch in Abwesenheit der Polyurethanlösung. Es wurde eine Beschichtung erhalten, deren Oberflächenwiderstand ca 1MΩ (2-Punkt-Methode) betrug.

### Vergleichsbeispiel 4

Der Versuch wurde entsprechend Beispiel 11 durchgeführt, jedoch in Abwesenheit der Polyurethanlösung. Es wurde eine Polypyrrolbeschichtung mit einer spezifischen Leitfähigkeit von 81 S/cm und 7 µm Dicke erhalten, die leicht unzerstört als Film abgelöst werden konnte.

### Vergleichsbeispiel 5

Der Versuch wurde entsprechend Beispiel 12 durchgeführt, jedoch wurde die Polyurethanlösung durch THF ersetzt. Es wurde eine Polypyrrolbeschichtung mit einer spezifischen Leitfähigkeit von 56 S cm⁻¹ und einer Dicke von 6 µm erhalten, die leicht unzerstört als Film abgelöst werden konnte.

## Patentansprüche

1. Zusammensetzungen, enthaltend
A) Polymere, die entweder intrinsisch oder nachdem sie dotiert wurden elektrisch leitfähig sind und
B) Polyurethane, erhältlich aus
a) Polydiolen mit einem Molekulargewicht von 400 bis 10 000,
b) Gemischen aus
b₁) )mindestenseinemDiol mit 2 bis 20 Kohlenstoffatomen und
b₂) mindestens eine Phosphonat- oder Sulfonatgruppe aufweisenden Diolen,
c) Tri- oder Polyolen mit 3 bis 25 Kohlenstoffatomen,
d) Diisocyanaten mit 6 bis 30 Kohlenstoffatomen und
e) OH-gruppenhaltigen primären oder sekundären Aminoalkoholen, monofunktionellen primären oder sekundären Aminen oder monofunktionellen Alkoholen mit jeweils bis zu 20 Kohlenstoffatomen,
wobei das molare Verhältnis der Komponenten a:b:c:d:e 1:0,3 bis 20:0,01 bis 1:1,35 bis 30:0,05 bis 8 beträgt und das Verhältnis der OH-Gruppen der Komponenten a bis c zu den-NCO-Gruppen der Komponente d 1:1,03 bis 1:1,4 beträgt
oder
C) Polyurethane, erhältlich aus den Komponenten a, b₁, d und e, wobei das molare Verhältnis dieser Komponenten 1:0,2 bis 20:1,2 bis 30:0,1 bis 8 beträgt und das Verhältnis der OH- und NH-Gruppen der Komponenten a, b₁ und e zu den NCO-Gruppen der Komponente d 1,05 bis 1,5:1 beträgt
oder
D) Polyurethanen, erhältlich aus den Komponenten a, b₁, c, d und e, wobei das molare Verhältnis dieser Komponenten 1:0,2 bis 20:0,01 bis 1:1,25 bis 34:0,1 bis 8 beträgt und das Verhältnis der OH- und NH-Gruppen in den Komponenten a, b₁, c und e zu den NCO-Gruppen der Komponente d 1,05 bis 1,5:1 beträgt
oder eine Mischung der Polyurethane B bis D.

2. Zusammensetzungen nach Anspruch 1, enthaltend
0,1 bis 50 Gew.-% Polymere A und
50 bis 99,9 Gew.-% Polyurethane B, C oder D.

3. Zusammensetzungen nach Anspruch 1 oder 2, enthaltend als Polymere A Polypyrrol oder Polythiophen.

4. Zusammensetzungen nach einem der Ansprüche 1 bis 3, enthaltend Polymere A, die mit einem Eisensalz dotiert wurden.

5. Zusammensetzungen nach einem der Ansprüche 1 bis 4, enthaltend Polyurethane B, C oder D, die mit einem Isocyanat aus der organischen Gruppe der Di-, Tri-, Polyisocyanate und der Isocyanatprepolymere mit einem Molekulargewicht bis zu 10 000 vernetzt werden.

6. Verfahren zum Herstellen von Zusammensetzungen, enthaltend
A) Polymere, die entweder intrinsisch oder nachdem sie dotiert wurden elektrisch leitfähig sind und
B) Polyurethane, erhältlich aus
a) Polydiolen mit einem Molekulargewicht von 400 bis 10 000,
b) Gemischen aus
b₁) mindestens einem Diol mit 2 bis 20 Kohlenstoffatomen und
b₂) mindestens eine Phosphonat- oder Sulfonatgruppe aufweisenden Diolen,
c) Tri- oder Polyolen mit 3 bis 25 Kohlenstoffatomen,
d) Diisocyanaten mit 6 bis 30 Kohlenstoffatomen und
e) OH-gruppenhaltigen primären oder sekundären Aminoalkoholen oder monofunktionellen Alkoholen mit jeweils bis zu 20 Kohlenstoffatomen,
wobei das molare Verhältnis der Komponenten a:b:c:d:e 1:0,3 bis 20:0,01 bis 1:1,35 bis 30:0,05 bis 8 beträgt und das Verhältnis der OH-Gruppen der Komponenten a bis c zu den NCO-Gruppen der Komponente d 1:1,03 bis 1:1,4 beträgt
oder
C) Polyurethane, erhältlich aus den Komponenten a, b₁, d und e, wobei das molare Verhältnis dieser Komponenten 1:0,2 bis 20:1,2 bis 30:0,1 bis 8 beträgt und das Verhältnis der OH- und NH-Gruppen der Komponenten a, b₁ und e zu den NCO-Gruppen der Komponente d 1,05 bis 1,5:1 beträgt
oder
D) Polyurethanen, erhältlich aus den Komponenten a, b₁, c, d und e, wobei das molare Verhältnis dieser Komponenten . 1:0,2 bis 20:0,01 bis 1:1,25 bis 34:0,1 bis 8 beträgt und das Verhältnis der OH- und NH-Gruppen in den Komponenten a, b₁, c und e zu den NCO-Gruppen der Komponente d 1,05 bis 1,5:1 beträgt
oder eine Mischung der Polyurethane B bis D, dadurch gekennzeichnet, daß man die Polyurethane B, C, D oder deren Mischungen entweder mit Lösungen oder Dispersionen der Polymeren A behandelt und anschließend das Lösungs- oder Dispersionsmittel entfernt oder die Monomeren der Polymeren A in Gegenwart der Polyurethane B, C, D zu den Polymeren A umsetzt.

7. Verwendung der Zusammensetzungen gemäß einem der Ansprüche 1 bis 5 als Beschichtungen.

8. Beschichtungen, enthaltend Zusammensetzungen gemäß einem der Ansprüche 1 bis 4.

9. Verwendung der Zusammensetzungen gemäß einem der Ansprüche 1 bis 4 zum Herstellen elektrischer, elektronischer oder elektrooptischer Bauteile oder von Korrosionsschutzlacken.

10. Formkörper, Folien oder Fasern, enthaltend Beschichtungen gemäß Anspruch 8.

## Claims

1. A composition containing
A) polymers which are electrically conductive either intrinsically or after they have been doped and
B) polyurethanes obtainable from
a) polydiols having a molecular weight of from 400 to 10,000,
b) mixtures of
b₁) at least one diol of 2 to 20 carbon atoms and
b₂) diols containing at least one phosphonate or sulfonate group,
c) tri- or polyols of 3 to 25 carbon atoms,
d) diisocyanates of 6 to 30 carbon atoms and
e) OH-containing primary or secondary amino alcohols, monofunctional primary or secondary amines or monofunctional alcohols, each of up to 20 carbon atoms,
the molar ratio of components a : b : c : d : e being 1 : 0.3 to 20 : 0.01 to 1 : 1.35 to 30 : 0.05 to 8 and the ratio of the OH groups of components a to c to the NCO groups of component d being from 1 : 1.03 to 1 : 1.4,
or
C) polyurethanes obtainable from components a, b₁, d and e, the molar ratio of these components being 1 : 0.2 to 20 : 1.2 to 30 : 0.1 to 8 and the ratio of the OH and NH groups of components a, b₁ and e to the NCO groups of component d being from 1.05 : 1 to 1.5 : 1,
or
D) polyurethanes obtainable from components a, b₁, c, d and e, the molar ratio of these components being 1 : 0.2 to 20 : 0.01 to 1 : 1.25 to 34 : 0.1 to 8 and the ratio of the OH and NH groups of components a, b₁, c and e to the NCO groups of component d being from 1.05 : 1 to 1.5 : 1,
or a mixture of the polyurethanes B to D.

2. A composition as claimed in claim 1, containing from 0.1 to 50% by weight of polymers A and from 50 to 99.9% by weight of polyurethanes B, C or D.

3. A composition as claimed in claim 1 or 2, containing polypyrrole or polythiophene as polymer A.

4. A composition as claimed in any of claims 1 to 3, containing polymers A which have been doped with an iron salt.

5. A composition as claimed in any of claims 1 to 4, containing polyurethanes B, C or D which are crosslinked with an isocyanate selected from the organic group consisting of the di-, tri- and polyisocyanates and of the isocyanate prepolymers having a molecular weight of up to 10,000.

6. A process for the preparation of a composition containing
A) polymers which are electrically conductive either intrinsically or after they have been doped and
B) polyurethanes obtainable from
a) polydiols having a molecular weight of from 400 to 10,000,
b) mixtures of
b₁) at least one diol of 2 to 20 carbon atoms and
b₂) diols containing at least one phosphonate or sulfonate group,
c) tri- or polyols of 3 to 25 carbon atoms,
d) diisocyanates of 6 to 30 carbon atoms and
e) OH-containing primary or secondary amino alcohols, monofunctional primary or secondary amines or monofunctional alcohols, each of up to 20 carbon atoms,
the molar ratio of components a : b : c : d : e being 1 : 0.3 to 20 : 0.01 to 1 : 1.35 to 30 : 0.05 to 8 and the ratio of the OH groups of components a to c to the NCO groups of component d being from 1 : 1.03 to 1 : 1.4,
or
C) polyurethanes obtainable from components a, b₁, d and e, the molar ratio of these components being 1 : 0.2 to 20 : 1.2 to 30 : 0.1 to 8 and the ratio of the OH and NH groups of components a, b₁ and e to the NCO groups of component d being from 1.05 : 1 to 1.5 : 1,
or
D) polyurethanes obtainable from components a, b₁, c, d and e, the molar ratio of these components being 1 : 0.2 to 20 : 0.01 to 1 : 1.25 to 34 : 0.1 to 8 and the ratio of the OH and NH groups of components a, b₁, c and e to the NCO groups of component d being from 1.05 : 1 to 1.5 : 1,
or a mixture of the polyurethanes B to D, wherein either the polyurethane B, C or D or the mixture thereof is treated with solutions or dispersions of the polymers A and the solvent or dispersant is then removed or the monomers of the polymers A are converted into the polymers A in the presence of the polyurethane B, C or D.

7. Use of a composition as claimed in any of claims 1 to 5 as a coating.

8. A coating containing a composition as claimed in any of claims 1 to 4.

9. Use of a composition as claimed in any of claims 1 to 4 for the production of an electrical, electronic or electro-optical component or of an anticorrosion coating.

10. A molding, film or fiber containing a coating as claimed in claim 8.

## Revendications

1. Compositions, contenant
A) des polymères qui sont électro-conducteurs, soit de manière intrinsèque, soit après avoir été dopés et
B) des polyuréthanes, pouvant être obtenus à partir
a) de polydiols avec un poids moléculaire de 400 à 10.000,
b) de mélanges constitués
b₁) d'au moins un diol avec 2 à 20 atomes de carbone et
b₂) de diols présentant au moins un groupe phosphonate ou sulfonate,
c) de tri- ou polyols avec 3 à 25 atomes de carbone,
d) de diisocyanates avec 6 à 30 atomes de carbone et
e) d'aminoalcools primaires ou secondaires contenant des groupes OH, d'amines monofonctionnelles primaires ou secondaires ou d'alcools monofonctionnels avec, respectivement, jusqu'à 20 atomes de carbone,
le rapport molaire des composants a : b : c : d : e valant 1 : 0,3 à 20 : 0,01 à 1 : 1,35 à 30 : 0,05 à 8 et le rapport des groupes OH des composants a à c aux groupes NCO du composant d valant 1 : 1,03 à 1 : 1,4
ou
C) des polyuréthanes, pouvant être obtenus à partir des composants a, b₁, d et e, le rapport molaire de ces composants valant 1 : 0,2 à 20 : 1,2 à 30: 0,1 à 8 et le rapport des groupes OH et NH des composants a, b₁ et e aux groupes NCO du composant d valant 1,05 à 1,5 : 1
ou
D) des polyuréthanes, pouvant être obtenus à partir des composants a, b₁, c, d et e, le rapport molaire de ces composants valant 1 : 0,2 à 20: 0,01 à 1 : 1,25 à 34 : 0,1 à 8 et le rapport des groupes OH et NH dans les composants a, b₁, c et e aux groupes NCO du composant d valant 1,05 à 1,5 : 1
ou un mélange des polyuréthanes B à D.

2. Compositions selon la revendication 1, contenant
0,1 à 50 % en poids de polymères A et
50 à 99,9 % en poids de polyuréthanes B, C ou D.

3. Compositions selon la revendication 1 ou 2, contenant à titre de polymères A du polypyrrole ou du polythiophène.

4. Compositions selon l'une des revendications 1 à 3, contenant des polymères A qui ont été dopés par un sel de fer.

5. Compositions selon l'une des revendications 1 à 4, contenant les polyuréthanes B, C ou D, qui sont réticulés avec un isocyanate du groupe organique des di-, tri-, polyisocyanates et des prépolymères isocyanates avec un poids moléculaire jusqu'à 10.000.

6. Procédé de préparation de compositions, contenant
A) des polymères qui sont électro-conducteurs, soit de manière intrinsèque, soit après avoir été dopés et
B) des polyuréthanes, pouvant être obtenus à partir
a) de polydiols avec un poids moléculaire de 400 à 10.000,
b) de mélanges constitués
b₁) d'au moins un diol avec 2 à 20 atomes de carbone et
b₂) de diols présentant au moins un groupe phosphonate ou sulfonate,
c) de tri- ou polyols avec 3 à 25 atomes de carbone,
d) de diisocyanates avec 6 à 30 atomes de carbone et
e) d'aminoalcools primaires ou secondaires contenant des groupes OH ou d'alcools monofonctionnels avec, respectivement, jusqu'à 20 atomes de carbone,
le rapport molaire des composants a: b: c: d: e valant 1 : 0,3 à 20 : 0,01 à 1 : 1,35 à 30 : 0,05 à 8 et le rapport des groupes OH des composants a à c aux groupes NCO du composant d valant 1 : 1,03 à 1 : 1,4
ou
C) des polyuréthanes, pouvant être obtenus à partir des composants a, b₁, d et e, le rapport molaire de ces composants valant 1 : 0,2 à 20 : 1,2 à 30 : 0,1 à 8 et le rapport des groupes OH et NH des composants a, b₁ et e aux groupes NCO du composant d valant 1,05 à 1,5 : 1
ou
D) des polyuréthanes, pouvant être obtenus à partir des composants a, b₁, c, d et e, le rapport molaire de ces composants valant 1 : 0,2 à 20: 0,01 à 1 : 1,25 à 34 : 0,1 à 8 et le rapport des groupes OH et NH dans les composants a, b₁, c et e aux groupes NCO du composant d valant 1,05 à 1,5 : 1
ou un mélange des polyuréthanes B à D, caractérisé en ce que, soit on traite les polyuréthanes B, C, D ou leurs mélanges avec des solutions ou des dispersions des polymères A et ensuite on élimine le solvant ou le dispersant, soit on convertit les monomères des polymères A en présence des polyuréthanes B, C, D en polymères A.

7. Utilisation des compositions selon l'une des revendications 1 à 5 à titre de revêtements.

8. Revêtements, contenant des compositions selon l'une des revendications 1 à 4.

9. Utilisation des compositions selon l'une des revendications 1 à 4 pour la production de composants électriques, électroniques ou électro-optiques ou de laques anticorrosives.

10. Objets moulés, films ou fibres, contenant des revêtements selon la revendication 8.
